# FASCICULE DE BREVET EUROPEEN

(11) **EP 1 747 140 B1**
(45) Date de publication et mention de la délivrance du brevet: **08.06.2011**
(21) Numéro de dépôt: 05762271.4
(22) Date de dépôt: 22.04.2005
(51) Int. Cl.: B62D 29/00, B29C 70/78

(54) **POUTRE À INSERT SURMOULÉ**
LEISTE MIT UMSPRITZTEM EINSATZ
BEAM WITH AN OVER-MOULDED INSERT

(30) Priorité: 23.04.2004 FR 0404356
(43) Date de publication de la demande: 31.01.2007
(73) Titulaire: COMPAGNIE PLASTIC OMNIUM, 69007 Lyon (FR)
(72) Inventeur: ANDRE, Gérald, F-01500 Ambérieu en Bugey (FR); HEGELEN, Daniel, F-01800 Meximieux (FR); ROUX, Jean-Pierre, F-69480 Pommiers (FR); ROCHEBLAVE, Laurent, F-69100 Villeurbanne (FR)
(74) Mandataire: Remy, Vincent Noel Paul
(86) Numéro de dépôt international: PCT/FR2005/001006
(87) Numéro de publication internationale: WO 2005/105554

(56) Documents cités:
- WO-A-03/097431
- US-B1- 6 663 150

## Description

La présente invention concerne une poutre de chocs d'un véhicule automobile.

On connaît les poutres de chocs de véhicules automobiles, qui sont des traverses du type servant à assurer une protection en cas d'impact d'un véhicule contre un obstacle.

En général, une telle poutre de chocs est susceptible d'absorber de l'énergie d'un choc même lorsque cette poutre de chocs a subi une grande déformation.

Deux types de protection sont attendus de la part de telles poutres.

Lorsque le choc se produit contre un obstacle fixe et à une hauteur correspondant normalement à un choc entre les pare-chocs de deux véhicules - on parle alors de voie haute - , une seule poutre de chocs, placée à la hauteur et dans le prolongement de longerons du véhicule, procure une protection d'organes du véhicule situés derrière elle, et absorbe le plus possible de l'énergie du choc.

En revanche, lorsque le choc se produit contre la jambe d'un piéton, une seconde poutre de chocs - on parle alors de voie basse - sert à empêcher la jambe du piéton de se déformer au point d'entraîner des lésions graves, notamment de son genou.

La présente invention concerne toutes les poutres de chocs, aussi bien celles de voies hautes que celles de voies basses.

Dans ce domaine, il est courant d'utiliser des structures de poutres comprenant une traverse rigide, souvent métallique, doublée d'un absorbeur, souvent en matière plastique et plus généralement en mousse. La traverse rigide apporte la résistance à la flexion et offre un appui sur toute la largeur du véhicule, appui grâce auquel l'absorbeur peut travailler essentiellement en compression, derrière la peau du pare-chocs, pour réduire la quantité d'énergie transmise au reste du véhicule.

Mais ces structures sont clairement constituées par la réunion de deux pièces distinctes, rapportées l'une sur l'autre, ou venant en contact lors du choc.

Par ailleurs, en dehors des poutres de chocs de véhicules automobiles, il est connu de réaliser des traverses dites hybrides, en surmoulant des nervures de renfort en matière plastique sur des profilés métalliques, de manière à profiter de l'inertie de l'ensemble ainsi constitué. Le document EP 0370342 montre un exemple d'une telle traverse.

De manière surprenante, l'application de telles structures à des poutres de chocs n'a jusqu'à présent pas été réalisée, probablement en raison du fait que les sollicitations brutales auxquelles sont soumises les poutres de chocs laissent présumer des comportements différents, non compatibles avec des pièces de structure hybride.

De plus, une poutre de chocs doit assurer l'absorption de l'énergie d'un choc même lorsqu'elle a subit des grandes déformations, ce qui ne semble pas possible pour une traverse hybride telle que connue dans l'état de la technique. En effet, pour une telle traverse, la matière plastique est rapportée sur le profilé métallique qu'en des points de liaison isolés, facilement fusibles notamment dans le cas de grandes déformations.

US 6663150B1 décrit un poutre de chocs selon le préambule de la revendication 1.

Les inventeurs à la base de la présente invention ont cependant constaté, en réalisant des simulations et des essais en grandeur réelle, que les poutres de chocs ont des comportements, en cas de sollicitations brutales, compatibles avec des pièces de structure hybride, et que, en outre, les structures hybrides offrent une meilleure compacité, ainsi qu'un gain de masse important, pour un comportement équivalent.

La présente invention vise donc à proposer une nouvelle structure de poutre de chocs, qui présente l'avantage d'être plus simple à réaliser et à monter sur véhicule, tout en étant plus compacte, plus légère et plus économique qu'une poutre de chocs conventionnelle.

La présente invention a pour objet une poutre de chocs selon la revendication 1.

Au sens de la présente invention, on entend par nervures de renfort des nervures qui sont aptes à améliorer la tenue géométrique de la traverse, de manière à lui conserver son inertie. Pour désigner de telles nervures, on utilise également les termes de nervures de stabilisation.

L'homme du métier saura, par des essais successifs et en tenant compte de la géométrie de la poutre de chocs, disposer et dimensionner les fenêtres pour que le procédé d'injection aboutisse à la formation des nervures de renfort d'un côté de la traverse et de l'absorbeur d'énergie de l'autre côté de la traverse.

L'invention, dans laquelle la poutre a des nervures de renfort de chaque côté de la traverse, mais obtenue par surmoulage dans un moule dans lequel la matière plastique n'est apportée que d'un côté de l'empreinte, permet de limiter considérablement le prix de revient du moule, et donc de la pièce.

Par ailleurs, comme les nervures supplémentaires forment un absorbeur d'énergie, l'absorbeur d'énergie et la traverse métallique ne forment ensemble qu'une seule pièce, ce qui facilite leur montage sur le véhicule automobile.

Dans un mode de réalisation particulier de l'invention, la traverse comporte au moins une fenêtre délimitée par un bord et la matière plastique surmoulée sur la traverse pour former les nervures de renfort recouvre au moins partiellement ce bord, de manière à réaliser l'accrochage mécanique de la matière plastique constituant les nervures sur la traverse métallique.

Dans ce mode de réalisation, la matière plastique ne remplit pas la fenêtre de la traverse, qui demeure une ouverture libre entre les deux cotés de la paroi dans laquelle elle est découpée.

Selon des variantes avantageuses de ce mode de réalisation, le bord de la fenêtre présente une découpe festonnée, ou de type fractale, ou en forme de grecque, ou en forme de raccord de pièces de puzzle, de manière à améliorer l'accrochage mécanique de la matière plastique sur la traverse métallique, notamment en assurant un accrochage efficace même en cas de sollicitation multidirectionnelle.

Selon une autre variante avantageuse, la fenêtre comprend des baguettes, qui constituent éventuellement des formes que la matière plastique peut enrober pour s'accrocher à la traverse métallique, en plus du bord de la fenêtre.

Les baguettes sont surtout utiles au maintien de la rigidité de la traverse, pour éviter que la présence des fenêtres ne la fragilise trop.

Avantageusement; les croisements entre baguettes ne comportent que deux ou trois branches, de sorte qu'ils forment uniquement des L ou des T, ce qui améliore la rigidité de la traverse, et dans le cas d'une fenêtre à quatre branches, les baguettes opposées sont

De manière optionnelle, la poutre de chocs selon l'invention comporte des boîtes d'absorption d'énergie.

De préférence, ces boîtes d'absorption d'énergie sont constituées d'un matériau choisi parmi l'acier, l'aluminium ou le plastique.

De préférence également, la traverse est constituée d'un matériau choisi parmi une tôle d'acier, une tôle d'aluminium ou un tissu de Twintex™.

Enfin, de manière avantageuse, les nervures de renfort sont constituées d'un matériau choisi parmi une matière thermoplastique chargée en talc, chargée en fibre de verre, ou non chargée, une matière thermodurcissable, ou un matériau HTPC (Hybrid Thermo Plastic Composite).

L'invention sera mieux comprise à la lecture de la description qui va suivre, donnée uniquement à titre d'exemple et faite en se référant aux dessins dans lesquels :
- la figure 1 est une vue en perspective d'une poutre de chocs selon un mode de réalisation de l'invention,
- la figure 2 est une vue en perspective de la traverse métallique de la poutre de chocs de la figure 1,
- la figure 3 est une vue en coupe selon III-III de la figure 1,
- la figure 4 est une vue rapprochée selon la flèche IV de la traverse de la figure 2,
- la figure 5 est une vue en perspective d'une poutre de chocs selon un autre mode de réalisation de l'invention,
- la figure 6 est une vue similaire à la figure 3 d'une poutre de chocs selon un autre mode de réalisation de l'invention,
- la figure 7 est une vue rapprochée d'une partie d'une traverse d'une autre poutre de chocs,
- la figure 8 est une vue de face d'une autre traverse d'une autre poutre de chocs.

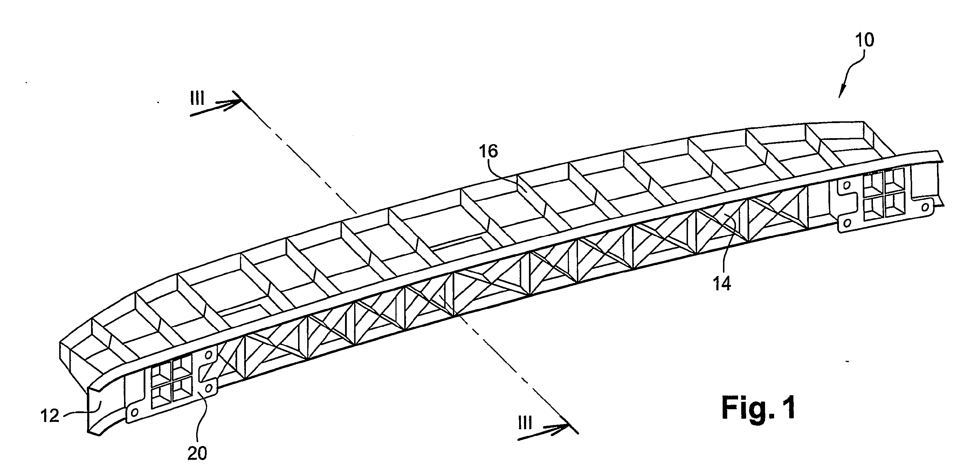

La poutre de chocs de la figure 1, désignée par la référence générale 10, comprend d'une part une traverse métallique 12 à section en U, également désignée insert, constituée par une paroi de fond et deux retours, et d'autre part un réseau de nervures internes 14 et un réseau de nervures externes 16.

Le réseau de nervures internes 14 a pour fonction de stabiliser la traverse métallique 12 en lui conservant sa section transversale en U, qui lui procure une inertie optimale. On sait en effet que l'inertie d'une pièce longitudinale dépend de la forme de sa section transversale.

La conservation de cette inertie de la traverse 12 requiert non seulement la présence du réseau de nervures internes 14, mais également un bon accrochage mécanique dudit réseau de nervures interne 14 à la traverse 12, ce qui est réalisé par le recouvrement de bords de fenêtres 18, comme cela sera décrit plus loin.

A chaque extrémité du réseau de nervures internes 14, des platines 20 de fixation de la poutre 10 sur des longerons (non représentés) du véhicule sont issus de moulage avec les nervures du réseau de nervures interne 14.

Ces nervures internes 14 sont intégralement comprises dans la section de l'insert 12, tandis que les platines 20 en font saillie en direction de l'intérieur du véhicule, c'est-à-dire vers l'arrière par rapport à la figure 1.

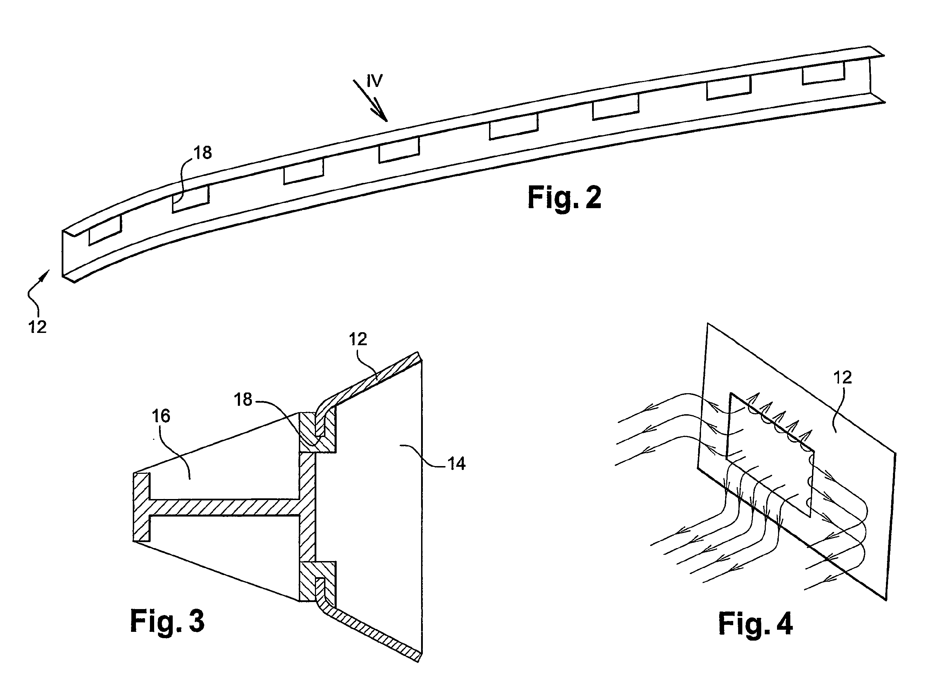

Sur la figure 2, on voit huit fenêtres 18 qui sont réparties sur toute la longueur de la traverse 12, sur sa paroi de fond.

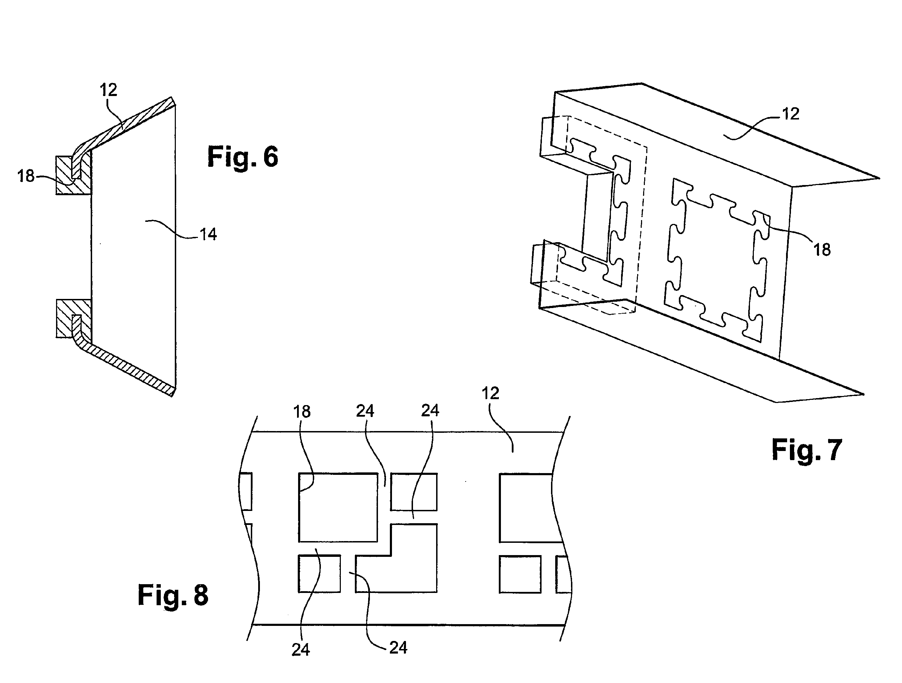

Comme le montre notamment la figure 6, la matière plastique, surmoulée sur la traverse 12 pour former les nervures internes 14, passe à travers la paroi de fond de la traverse 12 et déborde sur sa face opposée, en recouvrant le bord de chaque fenêtre 18. Ce recouvrement des bords des fenêtres 18 assure l'accrochage mécanique du réseau de nervures interne 14 sur la traverse 12.

On notera que cet accrochage mécanique assuré par le recouvrement des bords des fenêtres 18 permet un bon maintient de la matière plastique sur la traverse métallique 12, même en cas de grandes déformations.

De plus, comme la matière plastique s'étend tout le long des fenêtres 18 pour assurer l'accrochage, la poutre de chocs 10 ainsi constituée ne présente pas de faiblesses ponctuelles, et a une raideur sensiblement égale sur tout le long de la pièce. Ainsi, un choc est traité de manière similaire par la poutre de chocs 10 quelle que soit la zone de cette poutre 10 dans laquelle ce choc est réalisé.

Bien entendu, d'autres moyens d'accrochage mécanique peuvent être mis en oeuvre, seuls ou en combinaison avec le recouvrement de bords qui vient d'être décrit.

Le recouvrement de bords peut de préférence aussi être mis en oeuvre le long des bords longitudinaux externes de la traverse 12, notamment dans le but de protéger ces bords longitudinaux externes de la corrosion, en plus d'assurer l'accrochage de la matière plastique sur la traverse 12.

Conformément à un mode de réalisation particulier de l'invention, les fenêtres 18 remplissent une fonction supplémentaire au seul recouvrement de leurs bords : la matière plastique qui passe de l'autre côté de la traverse 12 pour recouvrir le bord de la fenêtre 18 se propage vers l'avant pour former les nervures du réseau de nervures externes 16 constituant un absorbeur d'énergie.

En variante, on pourra préférer mouler en premier lieu les nervures du réseau de nervures externes 16, de manière à ce que la matière plastique passe par les fenêtres 18 pour former le réseau de nervures internes 14.

La poutre de chocs 10 ainsi obtenue est représentée en coupe, au niveau d'une fenêtre 18, sur la figure 3.

Dans les deux cas, la matière plastique s'étend sans discontinuité au travers de l'insert 12. L'absorbeur d'énergie 16 est alors solidement maintenu contre la traverse 12.

On notera de plus que l'absorbeur d'énergie 16, ainsi maintenu contre la traverse 12, est plus efficace qu'un absorbeur d'énergie classique. En effet, cet absorbeur 16 travaille mieux en compression qu'un absorbeur classique, un tel absorbeur venant en contact avec une traverse lors du choc et pouvant notamment glisser contre cette traverse. Ainsi, l'absorbeur 16 étant plus efficace, il est possible de réduire la quantité de matière le formant, et de réduire ainsi la masse de la poutre de chocs 10.

Le dimensionnement des fenêtres 18 et leur répartition doivent être déterminés par l'homme du métier en fonction de la géométrie d'ensemble de la poutre de chocs 10, de manière que le flux de matière plastique traversant les fenêtres 18 soit suffisant.

Ce flux de matière plastique à travers une fenêtre 18 est représenté sur la figure 4.

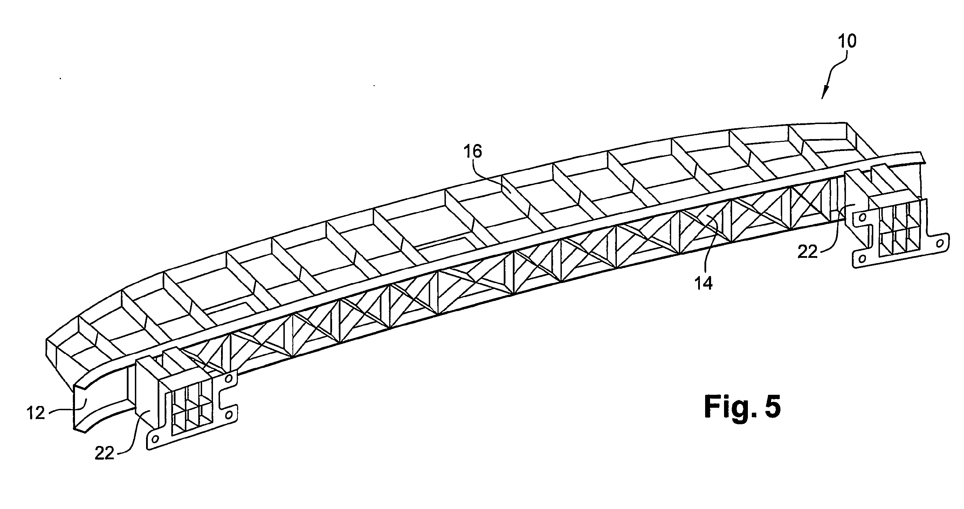

Sur les figures 5 à 8, les éléments analogues à ceux des figures précédentes sont désignés par des références identiques.

Sur la figure 5, on a représenté une autre poutre de chocs 10 comportant, en plus des nervures internes 14 et externes 16, des boîtes 22 d'absorption d'énergie, qui sont également issues de moulage avec l'ensemble des nervures 14, 16 recouvrant la traverse 12.

La figure 7 montre une configuration particulière de fenêtre 18, dont le bord est conformé en raccords de pièces de puzzle. Grâce à cette forme particulière du bord de la fenêtre 18, la matière plastique recouvrant le bord de la fenêtre 18 s'accroche plus efficacement à la traverse 12, même en cas de sollicitation multidirectionnelle.

Dans le mode de réalisation de la figure 8, chaque fenêtre 18 comporte quatre baguettes 24 qui se croisent en formant des croisillons dans la région centrale de la fenêtre 18. Ces baguettes 24 ont pour fonction de renforcer la traverse 12 en dépit de la présence des fenêtres 18. Pour améliorer davantage cet effet de renfort, deux baguettes 24 opposées sont décalées l'une par rapport à l'autre, de sorte que les quatre baguettes 24 ne se croisent pas en un même point de la fenêtre 18. Au contraire, les croisements se limitent à des intersections en T de deux baguettes 24 ou en L de trois baguettes 24.

Comme déjà expliqué, le recouvrement des bords de la fenêtre 18 assure l'accrochage mécanique des nervures 14 à la traverse 12, mais les baguettes 24 peuvent elles aussi être enrobées de matière plastique en vue de renforcer cet accrochage. On notera qu'un tel accrochage est efficace même en cas de sollicitation multidirectionnelle.

Il est bien entendu que les modes de réalisation qui viennent d'être décrits ne présentent aucun caractère limitatif et peuvent recevoir toute modification désirable sans pour cela sortir du cadre de l'invention.

## Revendications

1. Poutre de chocs (10) comprenant une traverse métallique (12), et des nervures de renfort (14), réalisées en matière plastique, surmoulées sur la traverse métallique (12), **caractérisée en ce que** une ou plusieurs fenêtres (18) sont dimensionnées et positionnées dans la traverse (12) de manière à permettre à la matière plastique injectée d'un côté de la traverse (12) de passer de l'autre côté de la traverse (12) et de former à la fois les nervures (14) et des nervures supplémentaires (16) constituant un absorbeur d'énergie.

2. Poutre de chocs (10) selon la revendication 1, dans laquelle au moins une fenêtre (18) est délimitée par un bord, et la matière plastique surmoulée sur la traverse (12) pour former les nervures de renfort (14) recouvre au moins partiellement ce bord, de manière à réaliser l'accrochage mécanique de la matière plastique constituant les nervures (14) sur la traverse métallique (12).

3. Poutre de chocs (10) selon la revendication 1 ou 2, dans laquelle le bord de la fenêtre (18) présente une découpe festonnée, ou de type fractale, ou en forme de grecque, ou en forme de raccord de pièces de puzzle, de manière à améliorer l'accrochage mécanique de la matière plastique sur la traverse métallique (12).

4. Poutre de chocs (10) selon l'une quelconque des revendications 1 à 3, dans laquelle la fenêtre (18) comprend des baguettes (24), qui constituent éventuellement des formes que la matière plastique peut enrober pour s'accrocher à la traverse métallique (12), en plus du bord de la fenêtre (18).

5. Poutre de chocs (10) selon la revendication 4, dans laquelle les croisements entre baguettes (24) ne comportent que deux ou trois branches, de sorte qu'ils forment uniquement des L ou des T.

6. Poutre de chocs (10) selon l'une quelconque des revendications 1 à 5, comportant des boîtes (22) d'absorption d'énergie.

7. Poutre de chocs (10) selon la revendication 6, dans laquelle les boîtes (22) d'absorption d'énergie sont constituées d'un matériau choisi parmi l'acier, l'aluminium ou le plastique.

8. Poutre de chocs (10) selon l'une quelconque des revendications 1 à 7, dans laquelle la traverse (12) est constituée d'un matériau choisi parmi une tôle d'acier, une tôle d'aluminium ou un tissu de Twintex™.

9. Poutre de chocs (10) selon l'une quelconque des revendications 1 à 8, dans laquelle les nervures de renfort (14, 16) sont constituées d'un matériau choisi parmi une matière thermoplastique chargée en talc, chargée en fibre de verre, ou non chargée, une matière thermodurcissable, ou un matériau HTPC (Hybrid Thermo Plastic Composite).

## Claims

1. An impact beam (10) comprising a metal crosspiece (12) and reinforcement ribs (14), made of a plastics material, overmolded onto the metal crosspiece (12), **characterized in that** one or more windows (18) are dimensioned and positioned in the crosspiece (12) so as to enable the plastics material injected on one side of the crosspiece (12) to pass through to the other side of the crosspiece (12) and to form both the ribs (14) and additional ribs (16) constituting an energy absorber.

2. An impact beam according to claim 1, in which at least one window (18) is defined by an edge, and the plastics material overmolded onto the crosspiece (12) for forming the reinforcement ribs (14) covers said edge at least in part, so that the plastics material of which the ribs (14) are made is mechanically fastened to the metal crosspiece (12).

3. An impact beam according to claim 1 or 2, in which the edge of the window (18) has a cutout configuration that is scalloped, or of fractal type, or of Greek key pattern shape, or shaped like the joins between pieces of jig-saw puzzle, so as to improve the mechanical fastening of the plastics material to the metal crosspiece (12).

4. An impact beam according to any one of claims 1 to 3, in which the window (18) is provided with battens (24) optionally constituting shapes that the plastics material can coat in order to fasten said material to the metal crosspiece (12) in addition to said material coating the edge of the window (18).

5. An impact beam according to claim 4, in which the crossings between battens (24) have only two or three branches, so that they form merely L-shapes or T-shapes.

6. An impact beam according to any one of claims 1 to 5, including energy absorber boxes (22).

7. An impact beam according to claim 6, in which the energy absorber boxes (22) are made of a material selected from steel, aluminum, and plastic.

8. An impact beam according to any one of claims 1 to 7, in which the crosspiece (12) is made of a material selected from sheet steel, sheet aluminum, and Twintex™ woven fabric.

9. An impact beam according to any one of claims 1 to 8, in which the reinforcement ribs (14, 16) are made of a material selected from a thermoplastic material filled with talc, filled with glass fiber, or not filled, a thermosetting material, and a Hybrid Thermo-Plastic Composite (HTPC) material.

## Patentansprüche

1. Stoßleiste (10), die einen metallischen Querbalken (12) sowie Verstärkungsrippen (14), die aus Kunststoff hergestellt sind und die an dem metallischen Querbalken (12) geformt sind, aufweist, **dadurch gekennzeichnet, dass** ein oder mehrere Fenster (18) in dem Querbalken (12) derart bemessen und positioniert sind, dass es dem an einer Seite des Querbalkens (12) eingespritzten Kunststoff ermöglicht wird, an die andere Seite des Querbalkens (12) durchzugehen und sowohl die Rippen (14) als auch zusätzliche Rippen (16), die einen Energieabsorbierer bilden, auszubilden.

2. Stoßleiste (10) nach Anspruch 1, bei der mindestens ein Fenster (18) von einem Rand begrenzt ist, und bei der der auf dem Querbalken (12) zum Bilden der Verstärkungsrippen (14) geformte Kunststoff diesen Rand mindestens teilweise bedeckt, so dass das mechanische Halten des Kunststoffs, der die Rippen (14) bildet, auf dem metallischen Querbalken (12) realisiert ist.

3. Stoßleiste (10) nach Anspruch 1 oder 2, bei der der Rand des Fensters (18) einen festonierten Ausschnitt oder des Typs Fraktale oder in Mäanderform oder in Form eines Anschlusses von Puzzleteilen derart aufweist, dass das mechanische Halten des Kunststoffs auf dem metallischen Querbalken (12) verbessert wird.

4. Stoßleiste (10) nach einem der Ansprüche 1 bis 3, bei der das Fenster (18) Stäbe (24) aufweist, die eventuell Formen bilden, die der Kunststoff umhüllen kann, um an dem metallischen Querbalken (12) zusätzlich zum Rand des Fensters (18) zu halten.

5. Stoßleiste (10) nach Anspruch 4, bei der die Kreuzungen zwischen Stäben (24) nur zwei oder drei Schenkel aufweisen, so dass sie ausschließlich Lₛ oder Tₛ bilden.

6. Stoßleiste (10) nach einem der Ansprüche 1 bis 5, die Energieabsorptionsgehäuse (22) aufweist.

7. Stoßleiste (10) nach Anspruch 6, bei der die Energieabsorptionsgehäuse (22) aus einem Werkstoff bestehen, der aus Stahl, Aluminium oder Kunststoff ausgewählt ist.

8. Stoßleiste (10) nach einem der Ansprüche 1 bis 7, bei der der Querbalken (12) aus einem Werkstoff besteht, der aus einem Stahlblech, einem Aluminiumblech oder einem Twintex™-Gewebe ausgewählt ist.

9. Stoßleiste (10) nach einem der Ansprüche 1 bis 8, bei der die Verstärkungsrippen (14, 16) aus einem Werkstoff bestehen, der aus einem Thermoplastwerkstoff mit Verstärkung aus Talk, Verstärkung aus Glasfaser oder ohne Verstärkung, einem wärmehärtbaren Material oder einem HTPC-Material (Hybrid Thermo Plastic Composite) ausgewählt ist.
